# EUROPEAN PATENT APPLICATION

(11) **EP 4 439 841 A1**
(43) Date of publication of application: **02.10.2024**
(21) Application number: 23165921.0
(22) Date of filing: 31.03.2023
(51) Int. Cl.: H01M 50/403, H01M 50/429, H01M 50/434, H01M 50/44, H01M 50/446, H01M 50/491

(54) **NONWOVEN BATTERY SEPARATOR AND PROCESS OF MANUFACTURE**

(71) Applicant: Ahlstrom Oyj, 00100 Helsinki (FI)
(72) Inventor: HADDAD, Raoudha, 38780 Pont-Evêque (FR)
(74) Representative: Laine IP Oy

(57) **Abstract**

Battery separators are provided that include nanoalumina crystals and/or fibers, and a fiber blend including organic fibers. In one or more embodiments, the organic fibers can have a negative zeta potential in water prior to formation of the separator such that electrostatic adsorption of the nano-alumina crystals and/or fibers can occur. The battery separators are free of coatings and exhibit low shrinkage after one hour at temperatures up to 230°C, minimal pore sizes, a BET surface area greater than 10 m²/g. Also disclosed is a wet laid process for forming the battery separators.

## Description

### BACKGROUND

The present disclosure is generally directed to separators and processes for fabricating the separators, and more particularly to, non-woven microporous battery separators formed of nonwoven fibers including nanoalumina crystals and/or fibers.

Separators are often utilized in the construction of batteries such as lithium-ion batteries, hydrogen fuel cells, sodium ion batteries, and the like. The separators literally separate the anode and cathode in a battery to prevent short circuits. The separators can impact several battery performance parameters, including cycle life, energy and power density, and safety. In lithium-ion batteries, the separators are a key component for lithium-ion transportation, which is generally controlled by pore size and ion conductivity.

Heat generation, shrinkage, puncture are ongoing concerns with lithium-ion batteries especially as consumer batteries for electronic devices such as cell phones, and the like shrink in size. Charging these batteries require relatively high currents, which can impact the rate performance and battery safety. The battery separators for these types of batteries are typically the least thermally conductive component within the battery and are often fabricated from polymers such as polyolefins. Polyolefin battery separators such as those based on polypropylene and polyethylene tend to shrink and curl at the higher temperatures due to their lower melting temperature (approximately 130°C), which increases the risk of internal short circuiting. To overcome this issue, polyolefin separators typically require oxide coatings to increase heat resistance. Developing battery separators with improved thermal stability and higher electrolyte uptake is essential for enhancing safety as well as battery performance.

The development of separators exhibiting optimum properties is challenging. This is due to the complexity of the variables involved and their interdependencies. The suitability of a separator as a barrier is often correlated to its thickness and mechanical and dielectric strength, among other properties. Moreover, the separators must be sufficiently thick to prevent short circuits otherwise caused by dendritic growth of the lithium metal during use. Ion conduction is heavily influenced by its air permeability, tortuosity, pore size and pore distribution. As a reservoir for an electrolyte, its porosity and wettability are also important.

### BRIEF SUMMARY

The present disclosure is generally directed to battery separators, batteries including the battery separator, use of the battery separator, and processes for using and forming the battery separators. In one or more embodiments, the battery separator is a non-woven battery separator including a fiber blend including organic fibers; and nanoalumina crystals or fibers dispersed or grown on the organic fibers in the blend, wherein the battery separator has a density greater than about 0.5 g/cm³ to less than about 2 g/cm³.

A wet laid method for fabricating a non-woven battery separator includes providing an aqueous furnish onto a moving wire screen to form a web, the aqueous furnish comprising nanoalumina crystals and/or fibers, and a fiber blend including organic fibers having a negative zeta potential in water within a pH range of about 6 to about 8; and thermally consolidating the web under pressure and heat to form the non-woven battery separator, wherein the non-woven battery separator has a density greater than about 0.5 g/cm³ to less than about 2 g/cm³.

Additional features and advantages are realized through the techniques of the present invention. Other embodiments and aspects of the invention are described in detail herein and are considered a part of the claimed invention. For a better understanding of the invention with advantages and features, refer to the description and to the drawings.

### BRIEF DESCRIPTION OF THE DRAWINGS

Example embodiments of the invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout, and wherein:
FIG. 1 is a scanning electron microscope (SEM) image of an exemplary nonwoven battery separator including lyocell cellulose at 5,000 times magnification in accordance with one or more embodiment of the present disclosure; and
FIG. 2 is a scanning electron microscope (SEM) image of an exemplary nonwoven battery separator including softwood cellulose at 4,000 times magnification in accordance with one or more embodiment of the present disclosure.

### DETAILED DESCRIPTION

Disclosed herein are non-woven battery separators and processes for fabricating the non-woven battery separators. As will be described in greater detail herein, the non-woven separators generally include a fiber blend including organic fibers and alumina crystals and/or alumina fibers, wherein the alumina has an affinity for fibers that are included in the fiber blend. As used herein, the term "organic fibers" generally refers to fibers made from organic polymers: i.e., polymers which essentially contain carbon atoms in the backbone. Organic fibers can be natural or synthetic. Examples of organic fibers includes cellulosic pulp, plant fibers, polyester, polyethylene, polypropylene, synthetic cellulose such as viscose or lyocell, and the like.

In one or more embodiments, the organic fibers are selected to have a negative zeta potential within a pH range of about 6 to about 8 when measured in water prior to formation of the separator. The fabrication process for forming the nonwoven LIB separators is generally a single water-based wet laid process utilizing a furnish including alumina crystals or alumina fibers and the fiber blend including, for example, cellulosic fibers, wherein the fibers in the blend are free from any coatings. As noted above, the fibers can be selected to have a negative zeta potential at the pH of water (i.e., a pH of about 6 to about 8) wherein the alumina crystals or fibers are positively charged since alumina has an isoelectric point of about 8. As a result, selective affinity at the pH of water by electrostatic adsorption of the alumina crystals and/or fibers to the organic fibers having the negative zeta potential is quite high, resulting in good adhesion. In contrast, alumina affinity to other types of fibers having a positive zeta potential, is often quite low and/or does not occur.

In one or more embodiments, instead of utilizing commercially available alumina crystals and/or fibers, the alumina crystals and/or fibers are grown directly onto the organic fibers e.g., organic fibers having the negative zeta potential in the fiber blend based on a reaction of aluminum metal in accordance with US Pat. No. 6,838,005 to Tepper et al., US Pat. No. 7,601,262 to Tepper et al., US Pat. No. 7,311,752 to Tepper et al., and US Pat. Pub. No. 2008/0026041 to Tepper et al., all of which are incorporated herein by reference in their entireties. Such filter media can be configured to be used in pleated, spiral wound, disc or flat sheet media formats. The key to the effectiveness of the media is the grafting of alumina crystals and/or nanofibers onto at least the organic fibers, e.g., organic fibers having a negative zeta potential in the fiber blend. As such, the fibers including those having the negative zeta potential can act as a platform for the nanoalumina. The nanoalumina fibers can be about 2 nanometers (nm) in diameter and several hundred nm in length, having a typical surface area of 350-500 m² per gram.

One suitable process for forming the nano-aluminum oxide fibers on the organic fibers in the fiber blend generally includes the production of aluminum metal powder, which is subsequently utilized in an aqueous furnish including the fiber blend which reacts with the water to form the nano-alumina crystals and/or fibers. The aluminum metal powder can be produced by electro explosion of metal wire. For example, aluminum wire with a diameter of about 0.3 millimeters (mm) can be fed into a reactor containing about 3 atmospheres of argon absolute. A section about 100 mm long is electrically exploded by applying to the wire about 500 Joules (about 25 KV @ peak voltage of 20 KA where the capacitance of the capacitor bank is 2.4 µF). During the pulse that lasts about 1 microsecond, temperatures exceeding 10,000 Kelvin are produced, as well as x-ray and ultraviolet energy. Aluminum metal clusters are propelled through the argon resulting in high quench rates and a complex microstructure in the aluminum once frozen. The aluminum may be exposed to dry air to passivate (oxidize) the surface so that it can be handled in ambient air without ignition. The resulting nano-aluminum spheres are fully dense spherical particles with an average size of about 110 nanometers and are somewhat agglomerated.

An alternate method for producing aluminum metal powder involves electro exploding aluminum wire in a nitrogen environment at 3 atmospheres absolute pressure. Nitrogen is lower cost than argon and eliminates the passivation step since the nitride coated nano aluminum is not pyrophoric. In this case, the aluminum metal particles are coated with a layer of aluminum nitride (AlN). When hydrolyzed, boehmite fibers are produced. Ammonia and hydrogen are also produced as the principal gaseous by-products.

The aluminum metal powder is then reacted with water in the furnish, which includes the fiber blend, to produce the nano alumina crystals and/or fibers, which have an affinity for at least the organic fibers, e.g., organic fibers having the negative zeta potential contained within the fiber blend. By way of example, ammonium hydroxide can be added to the furnish including the nano-aluminum metal powder to initiate a reaction between the nano-aluminum metal powder and water to form the AlOOH and hydrogen. The mixture is then heated, cooled, and neutralized to approximately pH 7 using an acid such as sulfuric acid. The result is nanoalumina crystals and/or fibers that are electrostatically adsorbed onto the cellulosic fibers. The aqueous furnish can then be wet laid using a papermaking machine to form a wet laid web of the furnish, dewatered, and subsequently thermally consolidated to form the web, which can be cut to dimensions suitable of the intended use for the separator.

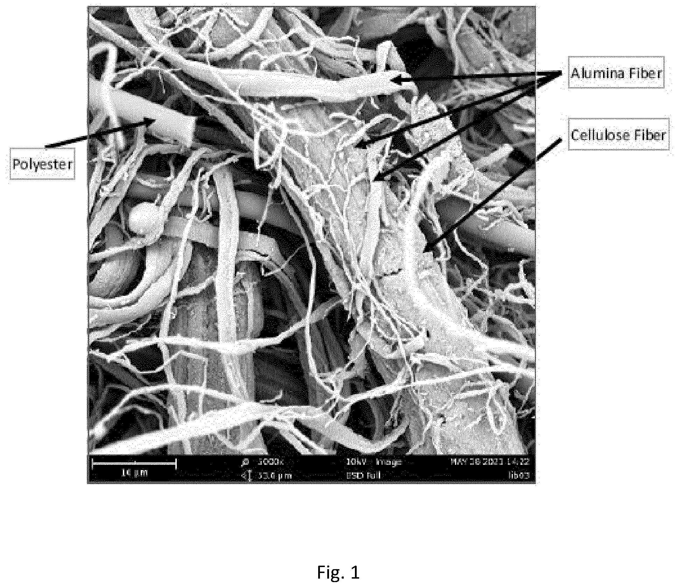

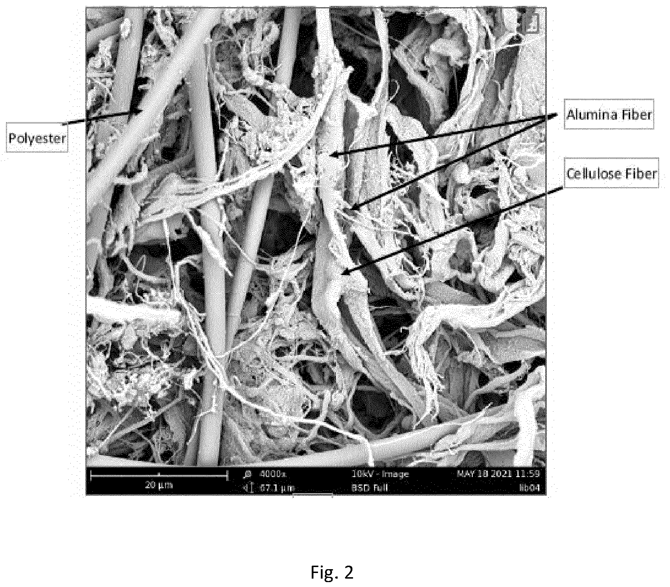

Referring now to FIG. 1, there is pictorially depicted a scanning electron micrograph at a magnification of 5000x showing the selective growth of nano-alumina crystals and/or fibers on lyocell cellulosic fibers, which have a negative zeta potential, in a fiber blend that included about 80 percent by weight of the lyocell cellulose fibers and about 20 percent by weight polyethylene terephthalate fibers (polyester), wherein the nano-alumina crystals and/or fibers are produced by hydrolysis of nano-aluminum powder within the furnish as generally described above. FIG. 2 is a scanning electron micrograph at a magnification of 4000x showing the selective growth of nano-alumina crystals and/or fibers on softwood cellulosic fibers, which have a negative zeta potential, in a fiber blend that included about 80 percent by weight of the softwood cellulose fibers and about 20 percent by weight polyethylene terephthalate fibers (polyester). As indicated in FIGS. 1 and 2, the nano-alumina crystals and/or fibers are electrostatically adsorbed onto the respective cellulose fibers having the negative zeta potential whereas there does not appear to be any significant affinity for the polyethylene terephthalate fibers.

Advantageously, non-woven battery separators formed from the nano-alumina fiber blends provide excellent heat resistance, low shrinkage, excellent mechanical properties, high ionic conductivity, and can optimized to provide a relatively small thickness and pore size as may be desired for different applications. Advantageously, battery separators have a thickness below 150µm, with primary lithium-ion battery separators preferably achieving thickness of less than 100µm. It is advantageous for battery separators to be thin to keep internal resistance low and achieve a high energy density without compromising on the required mechanical and puncture strength. So, in most preferable embodiments, the battery separator has thickness below 30µm. The pore size of the separator is generally smaller than the particles defining the electrodes within the battery. In one or more embodiments, Bendsten porosity can be less than 10 liters per minute (l/min), and in one or more other embodiments, porosity can be less than 5 l/min. Pores are advantageously uniformly distributed throughout the separator, and provide tortuous pathways through the separator. In this manner, the separator provides a uniform current distribution while helping to suppress formation of dendrites on the anode, e.g., lithium dendrites in the case of lithium-ion batteries. Additionally, the separator should be sufficiently porous to hold quantities of electrolyte and allow movement of ions between the electrodes during use. If the pore size is too high, e.g., greater than 5 microns, the ability of the pores to close when the battery is overheated can be affected. Although reference herein is made to LIB separators, it should be apparent to those skilled in the art that the separator as described herein can also be utilized in hydrogen fuel cell applications, sodium ion batteries, zinc air batteries, fuel cells, or the like.

In the present disclosure, conventional techniques related to wet laid manufacturing and calendaring processes for forming a non-woven web may or may not be described in detail herein. Moreover, the various tasks and process steps described herein can be incorporated into a more comprehensive procedure or process having additional steps or functionality not described in detail herein. Various steps in the additive manufacture of three-dimensional articles are well known and so, in the interest of brevity, many conventional steps will only be mentioned briefly herein or will be omitted entirely without providing the well-known process details.

For the purposes of the description hereinafter, the terms "upper", "lower", "top", "bottom", "left," and "right," and derivatives thereof shall relate to the described structures, as they are oriented in the drawing figures. The same numbers in the various figures can refer to the same structural component or part thereof. Additionally, the articles "a" and "an" preceding an element or component are intended to be nonrestrictive regarding the number of instances (i.e. occurrences) of the element or component. Therefore, "a" or "an" should be read to include one or at least one, and the singular word form of the element or component also includes the plural unless the number is obviously meant to be singular.

Spatially relative terms, e.g., "beneath," "below," "lower," "above," "upper," and the like, can be used herein for ease of description to describe one element or feature's relationship to another element(s) or feature(s) as illustrated in the figures.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

As used herein, the term "about" modifying the quantity of an ingredient, component, or reactant of the invention employed refers to variation in the numerical quantity that can occur, for example, through typical measuring and liquid handling procedures used for making concentrates or solutions. Furthermore, variation can occur from inadvertent error in measuring procedures, differences in the manufacture, source, or purity of the ingredients employed to make the compositions or carry out the methods, and the like.

It will also be understood that when an element, such as a layer, region, or substrate is referred to as being "on" or "over" another element, it can be directly on the other element or intervening elements can also be present. In contrast, when an element is referred to as being "directly on" or "directly over" another element, there are no intervening elements present, and the element is in contact with another element.

As used herein, the term "nonwoven" refers to a manufactured sheet, web, or batt of natural and/or man-made fibers or filaments that are bonded to each other by any of several means that is subsequently used as a battery separator. Manufacturing of nonwoven products is well described in "Nonwoven Textile Fabrics" in Kirk-Othmer Encyclopedia of Chemical Technology, 3rd Ed., Vol. 16, July 1984, John Wiley & Sons, p. 72~124 and in "Nonwoven Textiles", November 1988, Carolina Academic Press. Web bonding methods include mechanical bonding (e.g., needle punching, stitch, and hydro-entanglement), chemical bonding using binder chemicals (e.g., saturation, spraying, screen printing, and foam), and thermal bonding using binder fibers with low-melting points. Two common thermal bonding methods are air heating and calendaring. In air heating, hot air fuses low-melt binder fibers within and on the surface of the web to make high-loft nonwoven. In the calendaring process, the web is passed and compressed between heated cylinders to produce the nonwoven.

The term "nano-alumina" as used herein is defined as crystals and/or fibers, wherein the fibers generally have an aspect ratio in excess of about 5, where the smallest dimension is less than about 50 nm. The cross section of the fiber may be either circular (cylindrical fiber) or rectangular (platelet) in shape. The fibers are comprised of alumina, with various contents of combined water to result in compositions principally of AlOOH with various amounts of Al(OH)₃, with possible impurities of gamma and alpha alumina.

Exemplary organic fibers having a negative zeta potential include cellulosic fibers. In one or more embodiments, the organic fibers having the negative zeta potential can be fibrillated cellulosic fibers, which can be obtained by a fibrillation process. Fibrillation is a mechanical process that increases the surface area of the core fiber through the formation of tendrils or fibrils protruding from and attached to the core fiber. Exemplary cellulosic fibers having the negative zeta potential include, but are not limited to lyocell cellulosic fibers, which is a fibrillated cellulose pulp precipitated from an organic solution in which no substitution of hydroxyl groups takes place and no chemical intermediates are formed (Courtaulds, Ltd.).

In the present disclosure, the nonwoven LIB separator may be made from an aqueous furnish of the fiber blend including aluminum metal power that reacts with water to form the nano-alumina onto surfaces of the fibers having the negative zeta potential. The aqueous furnish can be wet laid using a papermaking machine to form a wet laid web of the furnish. The web is then thermally consolidated, e.g., by a calendaring process, which generally includes passing and compressing the web between heated cylinders to produce a low-loft nonwoven separator material. By way of example, the thermal consolidation process can include calendaring at a temperature of 60°C and a pressure of 2000 daN with the media going through four passes between the heat cylinders. In other examples, the thermal consolidation process can include a combination of multiple passes through rubberized roller and a steel roller at 120°C and a pressure of 450daN followed by passing the web through two steel tollers at 150°C and a pressure of 450daN, wherein the speed is about 100 meters per minute. The particular thermal consolidation parameters are not intended to be limited and can vary significantly to provide the desired loft and material characteristics. The thermal consolidation of the composite web effects a reduction in the fiber spacing and pore size by increasing density, i.e., by fiber compression and bonding. The density of the web material and the flatness (levelness) of the surface of the web material are substantially enhanced in the thermal consolidation process. In one or more embodiments, the thermal consolidation process is configured to provide the battery separator with a thickness of less than about 150 microns (µm). In one or more other embodiments, the thickness is less than about 50 µm, and in still one or more other embodiments, the thickness is less than about 50 µm. In yet one or more other embodiments, the calendaring process is configured to provide the battery separator with a thickness of less than about 30 µm, and in still one or more other embodiments, the calendaring process is configured to provide the battery separator with a thickness of less than about 25 µm.

As noted above, the fiber blend can include cellulosic fibers, which are selected to provide a negative zeta potential at the pH of water (i.e., a pH of about 6 to about 8), wherein the nano-alumina crystals and/or fibers have an affinity for the cellulosic fibers because of its positive zeta potential, i.e., the alumina crystals and/or fibers are electrostatically adsorbed onto the cellulosic fibers. Suitable cellulosic fibers for fabricating the LIB separator are not intended to be limited so long as the cellulose has a negative zeta potential and can include softwood, cotton, kapok, flax, ramie, kenaf, abaca, coir, hemp, jute, sisal, and pineapple, rayon, lyocell, bamboo fiber, various combinations hereof, and the like. Optionally, the fibers can be fibrillated cellulosic fibers such as the lyocell fibers noted above.

In one or more embodiments, the organic fibers having the negative zeta potential in the fiber blend are about 10 to about 95 percent by weight of the fiber blend composition. In one or more other embodiments, the fibers having the negative zeta potential are about 50 to about 95 percent by weight of the fiber composition, and in still one or more other embodiments, the fibers having the negative zeta potential are about 70 to about 90 percent by weight of the fiber composition.

Other fibers in the fiber blend can include, but are not limited to, thermoplastic polyesters, which offers high heat resistance as well as processability, dimensional stability and chemical resistance. Suitable thermoplastic polyesters include, but are not limited to, polycyclohexylenedimethylene terephthalate (PCT), polybutyleneterephthalate (PBT), and polyethyleneterephthalate (PET). Additionally, in some applications, it is desirable the cellulose fibers are used in combination with polyolefin such as polypropylene fibers, polyethylene fibers, and/or aromatic polyamide fibers. Optionally, the fiber blend can further include staple fibers having a melting point less than the cellulose fibers and other fibers in the fiber blend. In this manner, the calendaring process can heat the wet laid web to a temperature above the melting point of the staple fibers but below the melting temperature of the cellulose fibers and other fibers.

The size of the fibers in the fiber blend can influence the final thickness of the separator after thermal consolidation. In one or more embodiments, the fiber diameter can be selected to be between about 0.06 to 1.7 dtex (linear density of the media) and have a length of about 0.5 millimeters (mm) to about 12 mm. The various fibers utilized in the fiber blend can be made by melt spinning, wet spinning, solution spinning, melt blowing or the like. Such fibers may also be fibrillated into smaller fibers to form the wetlaid nonwoven separators.

The resulting thermally consolidated separators are designed to have small pores to function as a LIB separator and facilitate transport of lithium ions between electrodes of the LIB. In one or more embodiments, the thermally consolidated media has a maximum pore size of about 1 micron (µm) to about 5 µm with an average pore size of about 0.7 µm to about 3 µm. Additionally, the LIB separator has been found to have less than about 1% shrinkage and is stable at temperatures up to 230°C.

The surface area of the non-woven separator can be measured using Brunauer-Emmett-Teller (BET) methodology to generally characterize the amount of nano-alumina fiber growth on the organic fibers. In one or more embodiments, the non-woven separator has a BET greater than about 5 m²/g. In other embodiments, the non-woven separator has a BET greater than about 10 m²/g and in still other embodiments, the non-woven separator has a BET greater than about 20 m²/g.

This disclosure is further illustrated by the following examples, which are non-limiting.

### EXAMPLES

In this example, webs with and without nano-alumina fibers for a 50:50 fiber blend by weight of lyocell L10-4 (regenerated cellulosic pulp) and Cyphrex 10101 (polyethylene terephthalate) microfibers were formed by thermal consolidation. The nanoalumina fibers were obtained from the Nafen Company including a mixture of AlOOH, Al₂O₃ and small amounts impurities and were dispersed in the furnish with the fiber blend in water using a paper disintegrator at 3000 tours/minute. The nanoalumina fibers were principally boehmite (AlOOH) with a relatively small amount of gibbsite (Al₂O₃) having a width of about 2 nm and lengths of a few hundred nanometers. The nanoalumina fibers were observed to be heavily aggregated. Cyphrex 10101 fibers are less than 0.4 denier fibers with a flat or ribbon shaped cross section and a nominal width of 18 microns (µm), a nominal thickness of 2.5 µm, and a cut length of 1.5 millimeters (mm). The zeta potential of the lyocell/Cyphrex fiber blend was -53 millivolts (mv) using tap water. The addition of the nanoalumina fibers to the lyocell/cyphrex fiber blend leads to a positive zeta potential of 40 mv, which indicates affinity of the nanoalumina fibers to the lyocell fibers. Handsheets were made using this furnish and passed through a wire under pressure.

The thickness and porosity were then measured prior to thermal consolidation. Porosity was measured for the different samples using a Bendtsen tester, which measures porosity based on leak principle. Relatively small samples of the webs were clamped between a flat glass plate and a circular metal head. Air was then forced through the respective sample and the rate of airflow between the web and head was measured in l/minute. The results are shown in Table 1 below.

**Table 1.**

| | | | |
|---|---|---|---|
| | Thickness (µm) | Density (g/cm³) | Bendtsen (l/min) |
| Fiber Blend alone | 64 | 0.33 | 15.8 |
| Nanoalumina Fiber Blend | 63 | 0.33 | 2.28 |
| Nanoalumina Fiber Blend (thermally consolidated) | 27 | 0.78 | 0.15 |

The addition of the nanoalumina fibers did not impact thickness of the web. However, the addition of the nanoalumina fibers did significantly reduce porosity as evidenced by the markedly lower Bendtsen air flow rates compared to the respective webs without the nanoalumina fibers, which is generally considered to be a positive attribute for lithium-ion battery separator applications.

In the following examples, nonwoven media was formed of fiber blends of nanoalumina, cellulose fibers having a negative zeta potential and polyethylene terephthalate (Example A), nanoalumina, softwood and polyethylene terephthalate (Example B), cellulose and polyethylene terephthalate (Comparative Example A without nanoalumina), softwood and polyethylene terephthalate (Comparative Example B without nanoalumina) using a wet laid process from furnishes of each respective composition and characterized in the following Tables 2-7. The fiber blends included 80 percent by weight of the cellulose and 20 percent by weight of the polyethylene terephthalate.

The materials listed in Table 2 were used in the examples.

**Table 2.**

| Component | Description | Tradename | Manufacturer |
|---|---|---|---|
| Cellulose fibers | Precursor fiber 1.4 denier Lyocell; degree of fibrillation (Canadian Standard Freeness) 10 ± 5 milliliters; solids 25 ± 7 percent by weight; precursor fiber length 4.0 ± 0.2 millimeters (mm) | L-010-4 | Engineered Fibers Technology |
| Cellulose fibers | Brightness, ISO 2470-1 89.5 (≥88.5) %; dirt, ISO 5350-2 1.0 (≥5.0) mm²/kg; acetone-soluble extractives, ISO 14453 0.04 %; ash, ISO 1762 0.25 %; pH, ISO 29681 4.8; fiber length (lw), L&W Pulp Tester 2.10 mm; fiber width, L&W Pulp Tester 30.5 µm; coarseness, L&W Pulp Tester 135 µg/m | blue | Södra |
| PET fibers | Polyethylene terephthalate 0.06 dtex*3mm | Tepyrus SD 0.06-3 | Teijin |

In Tables 3 and 4, thickness, Bendsten and Gurley porosity, BET surface area, and pore sizes were measured for the non-woven separators of Examples A and B (with nanoalumina) and Comparative Examples A and B (without nanoalumina).

**Table 3.**

| Example | Cellulose-type | Grammage (g/m²) | ¹Thickness (µm) | Density (g/cm³) | Bendsten (I.min) | Gurley (s) | Porosity % |
|---|---|---|---|---|---|---|---|
| A | Lyocell | 21.4 | 29.4 | 0.728 | 2.18 | 5.28 | 40 |
| Comparative A | Lyocell | 20.7 | 27.6 | 0.750 | 4.01 | 3.06 | 46 |
| B | Softwood | 20.3 | 25.3 | 0.802 | 1.15 | 11.00 | 57 |
| Comparative B | Softwood | 20.5 | 25.5 | 0.804 | 0.33 | 36.73 | 46 |

| | | | | | | | |
|---|---|---|---|---|---|---|---|
| ¹ Thickness was measured in accordance with ISO 538 (1988) after application of 100 kPa pressure | | | | | | | |

**Table 4.**

| | Cellulose-type | BET (m²/g) | Max Pore Size (µm) | | Mean Pore Size (µm) | |
|---|---|---|---|---|---|---|
| | | | Average | Standard Deviation | Average | Standard Deviation |
| Ex. A | Lyocell | 37.94 | 2.13 | 0.21 | 1.80 | 0.21 |
| Comp Ex. A | Lyocell | 1.84 | 2.45 | 0.13 | 2.15 | 0.15 |
| Ex. B | Softwood | 48.89 | 2.76 | 0.43 | 2.09 | 0.38 |
| Comp. Ex B | Softwood | 1.24 | 1.43 | 0.20 | 1.19 | 0.14 |

As shown above, the increase in the BET surface area is an indicator of alumina growth on the cellulosic surfaces, which did not deleteriously impact pore sizes. Moreover, as is evident from the above, air permeability was markedly increased after alumina growth as evidenced by the measured Bendsten and Gurley porosity values. As it relates to thickness, calendaring results in a marked decrease in thickness due to the present of nanoalumina compared to the non-woven examples prepared without the nanoalumina.

Various mechanical properties and ionic conductivity were measured and are provided in Table 5 below.

**Table 5.**

| | Cellulose-type | Mechanical Properties | | MacMullin No. |
|---|---|---|---|---|
| | | Tensile Strength (N/m) | Elongation (%) | |
| Ex. A | Lyocell | 385.0 | 2.9 | 5.1 |
| Comp Ex. A | Lyocell | 480.0 | 2.3 | 4 |
| Ex. B | Softwood | 355.0 | 1.2 | 15.8 |
| Comp. Ex B | Softwood | 723.0 | 2.7 | 88 |

As shown, the mechanical properties for the samples with nanoalumina were comparable to the samples without the nanoalumina although tensile strength did decrease a small amount for the nanolumina fiber blends. The MacMullin Number, which is a measure of ionic conductivity and an important property for its use as a LIB separator, was excellent. For example, for the softwood fiber blend with and without nanoalumina, the presence of nanoalumina demonstrated significantly better ionic conductivity compared to the softwood fiber blend without the nanoalumina. For LIB applications, the MacMullin number is typically a value between 4 and 20, wherein a low number is desirable since the MacMullin number is indicative of the increase in effective conductivity directly related to the separator in a LIB.

In Table 6, the percentage of length and width shrinkage was measured at various temperatures for 1 hour for calendared samples of nanoalumina fiber blends having an initial length of 18.5 centimeters (cm) and an initial width of 4.7 (cm). Example A included a fiber blend of 80% lyocell L010-4 and 20% polyethylene terephthalate fibers; and Example B included a fiber blend of 80% Sodra Blue softwood fibers and 20% polyethylene terephthalate fibers. The results are shown in Table 6 below. As shown, the percentage of shrinkage in the length and width was minimal with less than about 1.3% shrinkage observed for the different temperatures, which is desirable for LIB separators since heat resistance is desirable. It was also observed that the nano-alumina non-woven samples were visually smoother compared to similar non-woven separators without the nano-alumina.

**Table 6.**

| Ex. | | 130°C/1 hour | | 160°C/1 hour | | 200°C/1 hour | | 230°C/1 hour | |
|---|---|---|---|---|---|---|---|---|---|
| | Cellulose-type | Length Shrink (%) | Width Shrink (%) | Length Shrink (%) | Width Shrink (%) | Length Shrink (%) | Width Shrink (%) | Length Shrink (%) | Width Shrink (%) |
| A | Lyocell | 0.54 | 0 | 0.81 | 0 | 0.81 | 0 | 1.08 | 0 |
| Comp Ex. A | Lyocell | 0.54 | 0 | 1.08 | 0 | 1.08 | 0 | 1.35 | 0 |
| B | Softwood | 0.27 | 0 | 0.54 | 0 | 0.54 | 0 | 0.81 | 0 |
| Comp . Ex B | Softwood | 0.27 | 0 | 0.54 | 1.06 | 0.54 | 2.13 | 0.81 | 2.13 |

In Table 7 below, the effect of thermal consolidation on the nano-alumina fiber blend is demonstrated for the nonwoven media of Examples A and B.

**Table 7.**

| Example | Thick. (µm) | Density (g/cm³) | Porosity | | Mechanical Properties | | Max Pore Size (µm) | | Mean Pore Size (µm) | |
|---|---|---|---|---|---|---|---|---|---|---|
| | | | Bendsten (I.min) | Gurley (s) | Tensile Strength (N/m) | Elong. (%) | Avg. | St. Dev. | Avg. | Std. Dev. |
| A-thermally consolidated | 29.4 | 0.728 | 2.18 | 5.28 | 385.0 | 2,9 | 2.13 | 0.21 | 1.80 | 0.21 |
| A'-not thermally consolidated | 66.9 | 0.309 | 13.16 | N/A | 60.0 | 1.1 | 5.13 | 0.16 | 3.77 | 0.17 |
| B-thermally consolidated | 25.3 | 0.802 | 1.15 | 11.00 | 355.0 | 1.2 | 2.76 | 0.43 | 2.09 | 0.18 |
| B'-not thermally consolidated | 63.0 | 0.325 | 10.20 | 1.20 | 155.0 | 1.3 | 6.77 | 0.75 | 3.70 | 1.93 |

| | | | | | | | | | | |
|---|---|---|---|---|---|---|---|---|---|---|
| Examples A and B were thermally consolidated by calendaring with 4 passes at 60°C and a pressure of 2000 daN; Examples A' and B' were not subject to thermal consolidation. | | | | | | | | | | |

As is clearly demonstrated, thermal consolidation advantageously reduces pore size, improves the mechanical strength and reduces thickness and increases the density. The advantageous increase in higher packing density can provide a tortuous path for the movement of ions and reduce formation of dendrites when in use as a battery separator. In one or more embodiments, thermal consolidation provides greater than about 0.5 g/cm³ and less than about 2 g/cm³. When the density is greater than about 2 g/cm³, the media can exhibit reduced mechanical strength, become brittle, and may be too non-porous for use as a battery separator.

These and other modifications and variations to the invention may be practiced by those of ordinary skill in the art without departing from the spirit and scope of the invention, which is more particularly set forth in the appended claims. In addition, it should be understood that aspects of the various embodiments may be interchanged in whole or in part. Furthermore, those of ordinary skill in the art will appreciate that the foregoing description is by way of example only, and it is not intended to limit the invention as further described in such appended claims. Therefore, the spirit and scope of the appended claims should not be limited to the exemplary description of the versions contained herein.

The invention is further illustrated by the following aspects, which are not intended to limit the claims.
Aspect 1. A non-woven battery separator comprising:
   a fiber blend comprising organic fibers; and
   nanoalumina crystals or fibers dispersed or grown on the organic fibers, wherein the non-woven battery separator has a density greater than about 0.5 g/cm³ to less than about 2 g/cm³.
Aspect 2. The battery separator according to aspect 1, wherein the organic fibers are about 10 to about 95 weight percent of the fiber blend or about 20 to about 95 percent by weight of the fiber blend or about 50 to about 90 percent by weight of the fiber composition.
Aspect 3. The battery separator according to any one of the preceding aspects, wherein the organic fibers comprise cellulosic fibers.
Aspect 4. The battery separator according to aspect 3, wherein the cellulosic fibers are selected from the group consisting of softwood, cotton, kapok, flax, ramie, kenaf, abaca, coir, hemp, jute, sisal, and pineapple, rayon, lyocell, bamboo fiber, and combinations thereof.
Aspect 5. The battery separator according to any one of the preceding aspects, wherein the battery separator has a thickness less than about 150 microns.
Aspect 6. The battery separator according to any one of the preceding aspects, wherein the organic fibers further comprises polyester fibers, aromatic polyamide fibers, polyolefins, or combinations thereof.
Aspect 7. The battery separator according to aspect 6, wherein the polyester comprises polyethylene terephthalate fibers.
Aspect 8. The battery separator according to any one of the preceding aspects, wherein the fiber blend comprises organic fibers having a negative zeta potential between a pH of 6-8.
Aspect 9. The battery separator according to any one of the preceding aspects, wherein the fiber blend comprises cellulosic fibers having the negative zeta potential and polyester fibers.
Aspect 10. The battery separator according to any one of the preceding aspects, wherein the separator has a maximum pore size of about 1 micron (µm) to about 5 µm.
Aspect 11, The battery separator according to any one of the preceding aspects, wherein the separator has a Bendsten porosity of less than 10 l/min or less than 5 l/min.
Aspect 12. The battery separator according to any one of the preceding aspects, wherein the separator has an average pore size of about 0.4 µm to about 3 µm.
Aspect 13. The battery separator according to any one of the preceding aspects, wherein the separator has percentage shrinkage in the length and width is less than 1.3% after one hour at temperatures of about 230°C.
Aspect 14. The battery separator according to any one of the preceding aspects, wherein the BET surface area is greater than 5 m²/g.
Aspect 15. The battery separator according to any one of the preceding aspects, wherein the battery separator has a MacMullin number less than 20.
Aspect 16. The battery separator according to any one of the preceding aspects, wherein the organic fibers have an average length of about 1.5 millimeters to about 12 millimeters.
Aspect 17. The battery separator according to any one of the preceding aspects, wherein the organic fibers have an average diameter of about 0.06 to 1.7 dtex.
Aspect 18. A battery, comprising the battery separator of any one or more of the preceding aspects.
Aspect 19. Use of a separator in a battery according to any one of preceding aspects 1-17.
Aspect 20. A method of separating a cathode from an anode of a battery by using the separator of any one of the preceding aspects 1-17.
Aspect 21. A wet laid method for fabricating a non-woven battery separator, the method of comprising:
   providing an aqueous furnish onto a moving wire screen to form a web, the aqueous furnish comprising nanoalumina crystals and/or fibers, and a fiber blend comprising fibers having a negative zeta potential in water within a pH range of about 6 to about 8; and
   thermally consolidating the web under pressure and heat to form the non-woven battery separator, wherein the non-woven battery separator has a density less than about 2 g/cm³.
Aspect 22. The method of aspect 21, wherein the fibers having the negative zeta potential comprise cellulosic fibers.
Aspect 23. The method of any one or the preceding aspects, wherein the fibers having the negative zeta potential comprise cellulosic fibers at about 20 to about 95 percent by weight of the fiber blend or about 20 to about 95 percent by weight of the fiber blend or about 50 to about 90 percent by weight of the fiber composition.
Aspect 24. The method according to any one of the preceding aspects, wherein the fiber blend comprises cellulosic fibers having the negative zeta potential and polyester fibers.
Aspect 25. The method according to any one of the preceding aspects, wherein non-woven battery separator has a shrinkage in the length and width of less than about 1.3 percent after one hour at temperatures up to about 230°C.

## Claims

1. A non-woven battery separator comprising:
a fiber blend comprising organic fibers; and
nanoalumina crystals or fibers dispersed or grown on the organic fibers, wherein the non-woven battery separator has a density greater than about 0.5 g/cm³ to less than about 2 g/cm³.

2. The battery separator of claim 1, wherein the organic fibers are about 10 to about 95 weight percent of the fiber blend or about 20 to about 95 percent by weight of the fiber blend or about 50 to about 90 percent by weight of the fiber composition.

3. The battery separator of any one of the preceding claims, wherein the organic fibers comprise cellulosic fibers.

4. The battery separator of any one of the preceding claims, wherein the battery separator has a thickness less than about 150 microns.

5. The battery separator of any one of the preceding claims, wherein the organic fibers further comprises polyester fibers, aromatic polyamide fibers, polyolefins, or combinations thereof.

6. The battery separator of any one of the preceding claims, wherein the fiber blend comprises organic fibers having a negative zeta potential between a pH of 6-8.

7. The battery separator of any one of the preceding claims, wherein the separator has a maximum pore size of about 1 micron (µm) to about 5 µm.

8. The battery separator of any one of the preceding claims, wherein the separator has a Bendsten porosity of less than 10 l/min or less than 5 l/min.

9. The battery separator of any one of the preceding claims, wherein the separator has an average pore size of about 0.4 µm to about 3 µm.

10. The battery separator of any one of the preceding claims, wherein the separator has percentage shrinkage in the length and width is less than 1.3% after one hour at temperatures of about 230°C.

11. The battery separator of any one of the preceding claims, wherein the BET surface area is greater than 5 m²/g.

12. The battery separator of any one of the preceding claims, wherein the battery separator has a MacMullin number less than 20.

13. A method of separating a cathode from an anode of a battery by using the separator of any one of the preceding claims 1-12.

14. A wet laid method for fabricating a non-woven battery separator, the method of comprising:
providing an aqueous furnish onto a moving wire screen to form a web, the aqueous furnish comprising nanoalumina crystals and/or fibers, and a fiber blend comprising fibers having a negative zeta potential in water within a pH range of about 6 to about 8; and
thermally consolidating the web under pressure and heat to form the non-woven battery separator, wherein the non-woven battery separator has a density less than about 2 g/cm³.

15. The method of claim 14, wherein the fibers having the negative zeta potential comprise cellulosic fibers at about 20 to about 95 percent by weight of the fiber blend or about 20 to about 95 percent by weight of the fiber blend or about 50 to about 90 percent by weight of the fiber composition.
